(19) 

**Europäisches Patentamt**
**European Patent Office**
**Office européen des brevets**

(11)  **EP 3 193 024 B1**

(12)  # EUROPEAN PATENT SPECIFICATION

(45) Date of publication and mention
of the grant of the patent:
**28.12.2022 Bulletin 2022/52**

(21) Application number: **15839308.2**

(22) Date of filing: **14.04.2015**

(51) International Patent Classification (IPC):
**F15B 11/00** (2006.01)  **E02F 9/22** (2006.01)
**F15B 11/02** (2006.01)  **F15B 11/17** (2006.01)
**E02F 3/42** (2006.01)

(52) Cooperative Patent Classification (CPC):
**F15B 11/17; E02F 3/425; E02F 9/2235;**
**E02F 9/2242; E02F 9/2282; E02F 9/2285;**
**E02F 9/2292; E02F 9/2296;** F15B 2211/20576;
F15B 2211/265; F15B 2211/3059;
F15B 2211/30595; F15B 2211/6652;
F15B 2211/6654; F15B 2211/7135;  (Cont.)

(86) International application number:
**PCT/JP2015/061486**

(87) International publication number:
**WO 2016/038921 (17.03.2016 Gazette 2016/11)**

(54) **HYDRAULIC CONTROL DEVICE FOR WORK MACHINE**

HYDRAULISCHE STEUERUNGSVORRICHTUNG FÜR EINE ARBEITSMASCHINE

DISPOSITIF DE COMMANDE HYDRAULIQUE POUR MACHINE DE TRAVAIL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.09.2014 JP 2014187120**

(43) Date of publication of application:
**19.07.2017 Bulletin 2017/29**

(73) Proprietor: **Hitachi Construction Machinery Co.,**
**Ltd.**
**Taito-ku,**
**Tokyo 110-0015 (JP)**

(72) Inventors:
• **MORIKI, Hidekazu**
  **Tokyo 100-8280 (JP)**
• **IMURA, Shinya**
  **Tsuchiura-shi**
  **Ibaraki 300-0013 (JP)**
• **ISHIKAWA, Kouji**
  **Tsuchiura-shi**
  **Ibaraki 300-0013 (JP)**

• **YAMASHITA, Ryohei**
  **Tsuchiura-shi**
  **Ibaraki 300-0013 (JP)**

(74) Representative: **MERH-IP Matias Erny Reichl**
**Hoffmann**
**Patentanwälte PartG mbB**
**Paul-Heyse-Strasse 29**
**80336 München (DE)**

(56) References cited:
**EP-A1- 2 711 559**  **EP-A1- 2 803 770**
**EP-A2- 1 743 980**  **WO-A1-2008/018538**
**JP-A- S59 194 105**  **JP-A- 2013 181 286**
**JP-A- 2013 181 286**  **US-A- 5 829 252**
**US-A1- 2006 130 473**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
F15B 2211/7142

**Description**

Technical Field

The present invention relates to a hydraulic control system for a work machine.

Background Art

In a hydraulic control system for an excavator or other work machine, a pump delivery amount increases in accordance with the operation amount of an operating device, and at the same time, a spool in a control valve is operated by a pilot pressure based on the operation amount to permit a hydraulic pump to communicate with hydraulic actuators such as a hydraulic cylinder and a hydraulic motor. As the spool in the control valve has an opening formed to vary in accordance with a stroke, the degree of communication between the hydraulic actuators and the hydraulic pump can be changed by the pilot pressure.

Consequently, when a combined operation is performed to simultaneously operate a plurality of hydraulic actuators, the pump delivery amount can be divided to operate in combination the hydraulic actuators in accordance with the operation amounts of individual operating devices.

A hydraulic control circuit for a construction machine that is described, for instance, in Patent Document 1 controls a first pump and a second pump in order to avoid a decrease in an operating speed when a hydraulic actuator for an attachment and another hydraulic actuator operate in combination with each other. The hydraulic control circuit is capable of supplying hydraulic fluid from the first pump to the hydraulic actuator for the attachment and another hydraulic actuator through an associated spool and from the second pump to the hydraulic actuator for the attachment and another hydraulic actuator through an associated spool. The first pump and the second pump are controlled in such a manner that the flow rate obtained when the hydraulic actuator for the attachment and another hydraulic actuator operate in combination with each other is equal to the sum of the flow rate of the hydraulic actuator for an attachment and the flow rate of the other hydraulic actuator.

Furthermore, Patent Document 1 discloses a hydraulic drive device for a working machine which is provided with a working device including a boom and an arm connected to the boom and which can perform combined operation of boom raising and arm crowding. Patent Document 2 discloses a construction machine having an engine, first and second pumps connected to the engine and adapted to be operated by the output torque of the engine, a revolution actuator to be driven by oil discharged from the first pump, a boom cylinder to be driven by oil discharged from at least the second pump, means for detecting the operation amount of an operation member which operates the boom, and a controller.

Prior Art Literature

Patent Document

Patent Document 1: JP-2010-236607-A

Patent Document 2: EP 2 711 559 A

Patent Document 3: JP 2013-181286 A

Summary of the Invention

Problems to be Solved by the Invention

The above-described prior hydraulic control circuit makes it possible to prevent the operating speed of a hydraulic actuator from decreasing due to an insufficient pump flow rate during a combined operation. This circuit not only provides increased work efficiency, but also avoids an unnecessary increase in a pump flow rate.

However, when the load pressure of a hydraulic actuator is different from that of the hydraulic actuator for the attachment when they are operated in combination, a flow division loss occurs in the above-described prior hydraulic control circuit in accordance with the pressure difference and flow rate. Consequently, the flow division loss may increase with an increase in the flow rate of a hydraulic pump.

The present invention has been made in view of the above circumstances. An object of the present invention is to provide a hydraulic control system for a work machine according to claim 1 that is capable of reducing the loss caused by flow division while reducing a decrease in the speed of a hydraulic actuator due to a combined operation.

Means for Solving the Problems

In accomplishing the above object, according to a first aspect of the present invention, there is provided a hydraulic control system for a work machine including a first hydraulic actuator, one hydraulic pump, a second hydraulic actuator, another hydraulic pump, and a secondary spool for the first hydraulic actuator. The one hydraulic pump is capable of supplying hydraulic fluid to the first hydraulic actuator through a primary spool for the first hydraulic actuator. The another hydraulic pump is capable of supplying hydraulic fluid to the second hydraulic actuator through a primary spool for the second hydraulic actuator. The secondary spool for the first hydraulic actuator is capable of placing the first hydraulic actuator in communication with the another hydraulic pump. The hydraulic control system further includes operating instruction detection means and pump flow control means. The operating instruction detection means detects that operating instructions are issued to the first hydraulic actuator and the second hydraulic actuator. The pump flow control means is capable of adjusting the delivery flow rate of the one hydraulic pump and the delivery flow rate of the another hydraulic pump on an individual basis in accordance with operation amounts designated by the operating instructions for the first and second hydraulic actuators, which are detected by the operating instruction detection means. When the first and second hydraulic actuators are simultaneously operated, the pump flow control means increases the delivery flow rate of the one hydraulic pump to a higher rate than when the first hydraulic actuator is operated and the second hydraulic actuator is not operated.

Advantages of the Invention

According to the present invention, the hydraulic control system for a work machine includes the first hydraulic actuator, the one hydraulic pump, the second hydraulic actuator, the another hydraulic pump, and the secondary spool for the first hydraulic actuator. The one hydraulic pump is capable of supplying hydraulic fluid to the first hydraulic actuator through the primary spool for the first hydraulic actuator. The another hydraulic pump is capable of supplying hydraulic fluid to the second hydraulic actuator through the primary spool for the second hydraulic actuator. The secondary spool for the first hydraulic actuator is capable of placing the first hydraulic actuator in communication with the another hydraulic pump. When the first and second hydraulic actuators are simultaneously operated, the delivery flow rate of the one hydraulic pump increases to a higher rate than when the first hydraulic actuator is operated and the second hydraulic actuator is not operated. Therefore, it is possible to reduce a decrease in the speed of the first hydraulic actuator that is caused by the operation of the second hydraulic actuator. Further, in the above instance, the opening for communication between the first hydraulic actuator and the another hydraulic pump is interrupted. Consequently, the amount of divided flow of the delivery from the another hydraulic pump can be decreased to reduce the flow division loss.

Brief Description of Drawings

FIG. 1 is a perspective view illustrating a work machine having an embodiment of a hydraulic control system for a work machine in accordance with the present invention.

FIG. 2 is a hydraulic control circuit diagram illustrating an embodiment of the hydraulic control system for a work machine in accordance with the present invention.

FIG. 3 is a conceptual diagram illustrating a configuration of a controller included in an embodiment of the hydraulic control system for a work machine in accordance with the present invention.

FIG. 4 is a characteristic diagram illustrating an exemplary map of a target operation computation section of the controller included in an embodiment of the hydraulic control system for a work machine in accordance with the present invention.

FIG. 5 is a control block diagram illustrating an exemplary computation of a communication control section of the controller included in an embodiment of the hydraulic control system for a work machine in accordance with the present invention.

FIG. 6 is a conceptual diagram illustrating a configuration of a flow control section of the controller included in an embodiment of the hydraulic control system for a work machine in accordance with the present invention.

FIG. 7 is a control block diagram illustrating an exemplary computation of a boom flow distribution computation section of the controller included in an embodiment of the hydraulic control system for a work machine in accordance with the present invention.

FIG. 8 is a control block diagram illustrating an exemplary computation of an arm target flow distribution computation section of the controller included in an embodiment of the hydraulic control system for a work machine in accordance with the present invention.

FIG. 9 is a control block diagram illustrating an exemplary computation of a pump flow rate command computation section of the controller included in an embodiment of the hydraulic control system for a work machine in accordance with the present invention.

FIG. 10 is a characteristic diagram illustrating an exemplary operation related to pump flow control means in an embodiment of the hydraulic control system for a work machine in accordance with the present invention.

FIG. 11 is a characteristic diagram illustrating another exemplary operation related to the pump flow control means in an embodiment of the hydraulic control system for a work machine in accordance with the present invention.

FIG. 12 is a characteristic diagram illustrating an exemplary operation related to the pump flow control means and communication control means in an embodiment of the hydraulic control system for a work machine in accordance with the present invention.

FIG. 13 is a characteristic diagram illustrating another exemplary operation related to the pump flow control means and communication control means in an embodiment of the hydraulic control system for a work machine in accordance with the present invention.

Mode for Carrying Out the Invention

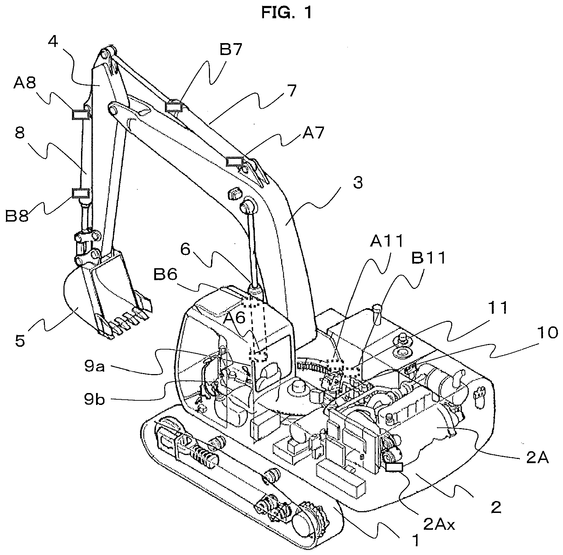

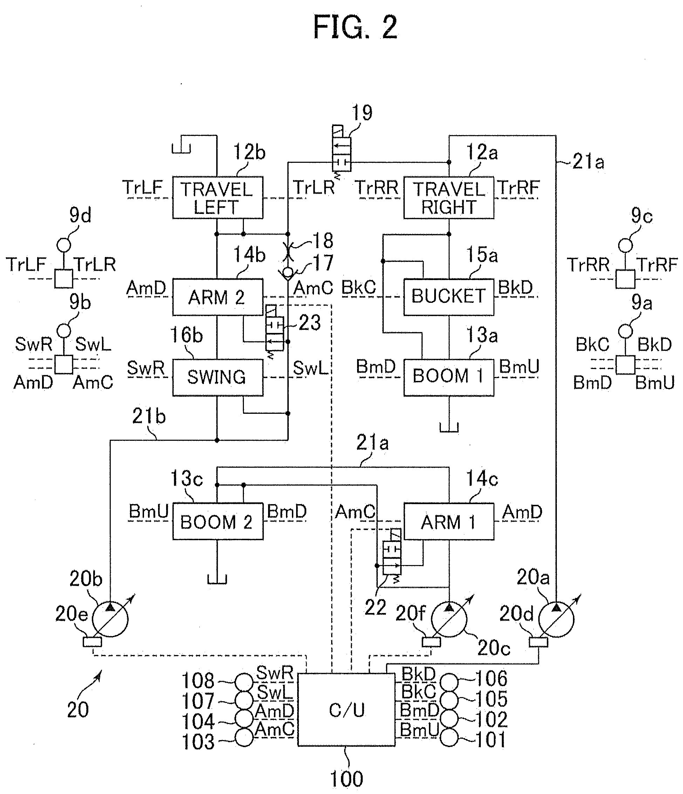

Embodiments of a hydraulic control system for a work machine according to the present invention will now be described with reference to the accompanying drawings. FIG. 1 is a perspective view illustrating a work machine having an embodiment of the hydraulic control system for a work machine in accordance with the present invention. FIG. 2 is a hydraulic control circuit diagram illustrating an embodiment of the hydraulic control system for a work machine in accordance with the present invention.

As illustrated in FIG. 1, a hydraulic excavator having an embodiment of the hydraulic control system for a work machine in accordance with the present invention includes a lower travel structure 1, an upper swing structure 2, a front work device, and an engine 2A. The upper swing structure 2 is disposed above the lower travel structure 1. The front work device is vertically rotatably connected to the upper swing structure 2. The engine 2A acts as a prime mover. The front work device includes a boom 3, an arm 4, and a bucket 5. The boom 3 is mounted on the upper swing structure 2. The arm 4 is mounted on the leading end of the boom 3. The bucket 5 is mounted on the leading end of the arm 4. The front work device further includes a pair of boom cylinders 6, an arm cylinder 7, and a bucket cylinder 8. The boom cylinders 6 drive the boom 3. The arm cylinder 7 drives the arm 4. The bucket cylinder 8 drives the bucket 5.

In accordance with operations of a first operating lever 9a and a second operating lever 9b, which are disposed in a cab on the upper swing structure 2, the hydraulic excavator operates in such a manner that hydraulic fluid discharged from a hydraulic pump device not shown is supplied to the boom cylinder 6, the arm cylinder 7, the bucket cylinder 8, and a swing hydraulic motor 11 through a control valve 10. As cylinder rods of the boom cylinder 6, arm cylinder 7, and bucket cylinder 8 are extended and contracted by the hydraulic fluid, the position and orientation of the bucket 5 can be changed. Further, as the swing hydraulic motor 11 is rotated by the hydraulic fluid, the upper swing structure 2 swings with respect to the lower travel structure 1.

The control valve 10 includes various later-described control valves, namely, a travel right directional control valve 12a, a travel left directional control valve 12b, a boom first directional control valve 13a, a boom second directional control valve 13c, an arm first directional control valve 14c, an arm second directional control valve 14b, a bucket directional control valve 15a, and a swing directional control valve 16b.

The engine 2A includes a revolving speed sensor 2Ax, which detects an engine revolving speed. The boom cylinder 6 includes a pressure sensor A6 and a pressure sensor B6. The pressure sensor A6 detects the pressure in a bottom oil chamber. The pressure sensor B6 detects the pressure in a rod oil chamber. The arm cylinder 7 includes a pressure sensor A7 and a pressure sensor B7. The pressure sensor A7 acts as load acquisition means that detects the pressure in a bottom oil chamber. The pressure sensor B7 detects the pressure in a rod oil chamber. Similarly, the bucket cylinder 8 includes a pressure sensor A8 and a pressure sensor B8. The pressure sensor A8 detects the pressure in a bottom oil chamber. The pressure sensor B8 detects the pressure in a rod oil chamber. The swing hydraulic motor 11 includes pressure sensors A11, B11, which detect left and right swing pressures. Pressure signals detected by the above-mentioned pressure sensors A6-A8, B6-B8, A11, B11 and the engine revolving speed detected by the revolving speed senor 2Ax are inputted to a later-described controller 100.

As illustrated in FIG. 2, a hydraulic pump device 20 included in an embodiment of the hydraulic control system for a work machine in accordance with the present invention supplies a pilot pressure to each directional control valve, which acts as a spool in the later-described control valve 10, in accordance with operations of the first to fourth operating levers 9a-9d in order to operate each directional control valve in the control valve 10. The pump device 20 in the hydraulic control system according to the present embodiment includes a first hydraulic pump 20a, a second hydraulic pump 20b, and a third hydraulic pump 20c, which are variable-displacement hydraulic pumps. The first to third hydraulic pumps 20a-20c are driven by the engine 2A.

The first hydraulic pump 20a includes a regulator 20d, which is driven by a command signal from the later-described controller 100, and supplies a controlled delivery amount of hydraulic fluid to a first pump line 21a. Similarly, the second hydraulic pump 20b includes a regulator 20e, which is driven by a command signal from the later-described controller 100, and supplies a controlled delivery amount of hydraulic fluid to a second pump line 21b. Further, the third hydraulic pump 20c includes a regulator 20f, which is driven by a command signal from the later-described controller 100, and supplies a controlled delivery amount of hydraulic fluid to a third pump line 21c.

For the sake of brevity of explanation, a relief valve, a return circuit, a load check valve, and other elements not directly associated with the present embodiment are omitted from the description. Although the present embodiment is described with respect to a case where the present invention is applied to a publicly known, open center type hydraulic control system, the present invention is not limited to such a hydraulic control system.

The travel right directional control valve 12a, the bucket directional control valve 15a, and the boom first directional control valve 13a are disposed in the first pump line 21a that is in communication with a delivery port of the first hydraulic pump 20a. A tandem circuit is formed in such a manner as to give priority to the travel right directional control valve 12a. The remaining bucket directional control valve 15a and boom first directional control valve 13a are formed as a parallel circuit.

The swing directional control valve 16b, the arm second directional control valve 14b, and the travel left directional control valve 12b are disposed in the second pump line 21b that is in communication with a delivery port of the second hydraulic pump 20b. The swing directional control valve 16b and the arm second directional control valve 14b are formed as a parallel circuit, and the travel left directional control valve 12b is formed as a parallel-tandem circuit. A check valve 17 and a restrictor 18, which permit only an inflow from the second hydraulic pump 20b, are disposed in the parallel circuit of the travel left directional control valve 12b. The travel left directional control valve 12b is capable of communicating with the first hydraulic pump 20 through a travel communication valve 19.

An arm 2 flow control valve 23 is disposed in the parallel circuit of the second pump line 21b and driven by a command from the controller 100.

The boom second directional control valve 13c and the arm first directional control valve 14c are disposed in the third pump line 21c that is in communication with a delivery port of the third hydraulic pump 20c. The boom second directional control valve 13c and the arm first directional control valve 14c are formed as a parallel circuit. An arm 1 flow control valve 22 is disposed in the parallel circuit of the third pump line 21c and driven by a command from the controller 100.

An outlet port of the boom first directional control valve 13a and an output port of the boom second directional control valve 13c are in communication with the boom cylinder 6 through a junction path not shown. An outlet port of the arm first directional control valve 14c and an outlet port of the arm second directional control valve 14b are in communication with the arm cylinder 7 through a junction path not shown. An outlet port of the bucket directional control valve 15a is in communication with the bucket cylinder 5, and an outlet port of the swing directional control valve 16b is in communication with the swing hydraulic motor 11.

Referring to FIG. 2, the first to fourth operating levers 9a-9d each include a pilot valve not shown and generate a pilot pressure in accordance with the amount of tilting operation of each operating lever. The pilot pressure generated by each operating lever is supplied to the operating section of each directional control valve.

Pilot lines indicated by broken lines BkC, BkD are connected from the first operating lever 9a to the operating section of the bucket directional control valve 15a and respectively used to supply a bucket crowding pilot pressure and a bucket dumping pilot pressure. Further, pilot lines indicated by broken lines BmD, BmU are connected from the first operating lever 9a to the operating sections of the boom first directional control valve 13a and boom second directional control valve 13c and respectively used to supply a boom raising pilot pressure and a boom lowering pilot pressure.

A pressure sensor 105 for detecting the bucket crowding pilot pressure and a pressure sensor 106 for detecting the bucket dumping pilot pressure are disposed in the pilot lines indicated by the broken lines BkC, BkD. A pressure sensor 101 for detecting the boom raising pilot pressure and a pressure sensor 102 for detecting the boom lowering pilot pressure are disposed in the pilot lines indicated by the broken lines BmD, BmU. The pressure sensors 101, 102, 105, 106 each act as operating instruction detection means. Pressure signals detected by the pressure sensors 101, 102, 105, 106 are inputted to the controller 100.

Pilot lines indicated by broken lines AmC, AmD are connected from the second operating lever 9b to the operating sections of the arm first directional control valve 14c and arm second directional control valve 14b and respectively used to supply an arm crowding pilot pressure and an arm dumping pilot pressure. Further, pilot lines indicated by broken lines SwR, SwL are connected from the second operating lever 9b to the operating section of the swing directional control valve 16b and respectively used to supply a swing right pilot pressure and a swing left pilot pressure.

A pressure sensor 103 for detecting the arm crowding pilot pressure and a pressure sensor 104 for detecting the arm dumping pilot pressure are disposed in the pilot lines indicated by the broken lines AmC, AmD. A pressure sensor 108 for detecting the swing right pilot pressure and a pressure sensor 107 for detecting the swing left pilot pressure are disposed in the pilot lines indicated by the broken lines SwR, SwL. The pressure sensors 103, 104, 107, 108 act as the operating instruction detection means. Pressure signals detected by the pressure sensors 103, 104, 107, 108 are inputted to the controller 100.

Pilot lines indicated by broken lines TrRF, TrRR are connected from a third lever device 9c to the operating section of the travel right directional control valve 12a and respectively used to supply a travel right forward pilot pressure and a travel right rearward pilot pressure.

Pilot lines indicated by broken lines TrLF, TrLR are connected from a fourth lever device 9d to the operating section of the travel left directional control valve 12b and respectively used to supply a travel left forward pilot pressure and a travel left rearward pilot pressure.

The hydraulic control system according to the present embodiment includes the controller 100. The controller 100 inputs the engine revolving speed from the revolving speed sensor 2Ax shown in FIG. 1 and inputs the pilot pressure signal of each pilot line from the aforementioned pressure sensors 101-108. Further, the controller 100 inputs a pressure signal of each actuator from the pressure sensors A6-A8, B6-B8, A11, B11 shown in FIG. 1.

Moreover, the controller 100 controls the delivery flow rates of the hydraulic pumps 20a-20c by outputting command signals to the regulator 20d of the first hydraulic pump 20a, to the regulator 20e of the second hydraulic pump 20b, and to the regulator 20f of the third hydraulic pump 20c. Additionally, the controller 100 outputs a command signal to the operating section of the arm 1 flow control valve 22 in order to exercise control to reduce the communication opening between the third hydraulic pump 20c and the arm cylinder 7 by increasing the magnitude of the command signal. Similarly, the controller 100 outputs a command signal to the operating section of the arm 2 flow control valve 23 in order to exercise control to reduce the communication opening between the second hydraulic pump 20b and the arm cylinder 7 by increasing the magnitude of the command signal.

A case where the pressure sensors 101-108 are used as the operating instruction detection means has been described. However, an alternative is to employ the operating levers 9a-9d as electric levers and use signals from the electric levers as the operating instruction detection means.

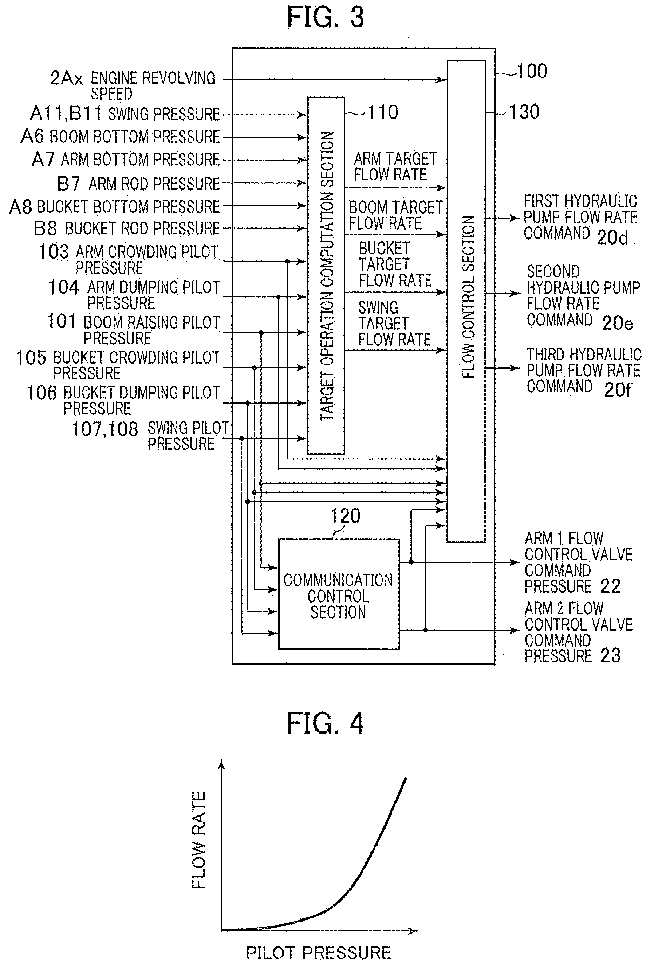

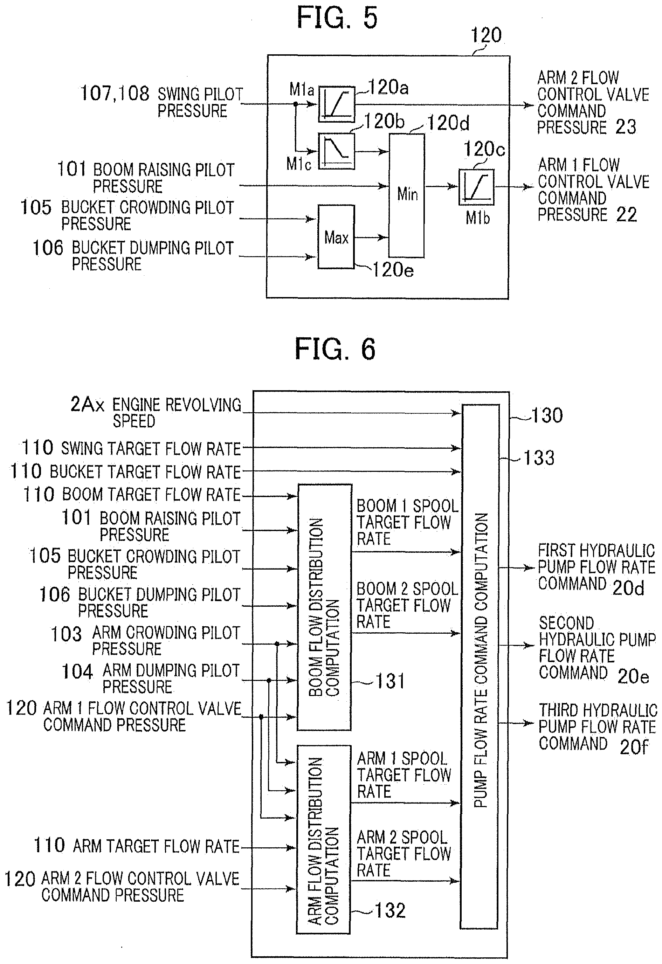

The controller included in an embodiment of the hydraulic control system for a work machine in accordance with the present invention will now be described with reference to the accompanying drawings. FIG. 3 is a conceptual diagram illustrating a configuration of the controller included in an embodiment of the hydraulic control system for a work machine in accordance with the present invention. FIG. 4 is a characteristic diagram illustrating an exemplary map of a target operation computation section of the controller included in an embodiment of the hydraulic control system for a work machine in accordance with the present invention. FIG. 5 is a control block diagram illustrating an exemplary computation of a communication control section of the controller included in an embodiment of the hydraulic control system for a work machine in accordance with the present invention.

As illustrated in FIG. 3, the controller 100 includes a target operation computation section 110, the communication control section 120, and a flow control section 130. The target operation computation section 110 computes target flow rates from the pilot pressures and load pressures. The communication control section 120 acts as communication control means that computes a command signal of the arm 1 flow control valve 22, which controls the communication of the control valve 10, and a command signal of the arm 2 flow control valve 23. The flow control section 130 acts as pump flow control means that calculates flow rate command signals for the first to third hydraulic pumps 20a-20c in accordance with the target flow rates calculated by the target operation computation section 110, the command signal calculated by the communication control section 120, and the engine revolving speed from the revolving speed sensor 2Ax. The flow control section 130 outputs command signals to the hydraulic pump regulators 20d-20f in order to control the delivery flow rates of the first to third hydraulic pumps 20a-20c.

The target operation computation section 110 computes the target flow rates in such a manner as to increase the target flow rates in accordance with an increase in each inputted pilot pressure and decrease the target flow rates in accordance with an increase in each inputted load pressure. During a combined operation, the computations are performed such that the target flow rates are lower than those during an independent operation.

An example of a computation performed by the target operation computation section 110 will now be described by using FIG. 4 and equations. The target operation computation section 110 stores a map for each actuator. The map is used to compute a reference flow rate from a pilot pressure shown in FIG. 4. For example, a swing target flow rate Qsw is calculated from a swing pilot pressure, which is a value obtained when the maximum values of the swing right pilot pressure and swing left pilot pressure are selected. Similarly, an arm crowding reference flow rate Qamc0 is calculated from the arm crowding pilot pressure, and an arm dumping reference flow rate Qamd0 is calculated from the arm dumping pilot pressure.

Meanwhile, a boom raising reference flow rate Qbmu0 is calculated from the boom raising pilot pressure. Further, a bucket crowding reference flow rate Qbkc0 is calculated from the bucket crowding pilot pressure, and a bucket dumping reference flow rate Qbkd0 is calculated from the bucket dumping pilot pressure.

The target operation computation section 110 uses Equation (1) to calculate a boom target flow rate Qbm from the swing target flow rate Qsw.

Equation 1

$$Q_{bm} = \min\left(Q_{bm0}, Q_{bm\,\max} - k_{swbm} \cdot Q_{sw}\right) \quad (1)$$

Qbmmax is an upper-limit value of a boom flow rate and set in accordance with the maximum boom raising speed. Meanwhile, kswbm is a boom flow rate reduction coefficient. The boom target flow rate Qbm decreases with an increase in the swing target flow rate Qsw. The boom flow rate reduction coefficient kswbm may be substituted by a map that causes the boom flow rate upper-limit value Qbmmax to decrease with an increase in the swing target flow rate Qsw.

The target operation computation section 110 uses Equations (2) and (3) to calculate swing power Lsw and boom power Lbm, respectively.

Equation 2

$$L_{sw} = P_{sw} \cdot Q_{sw} \quad (2)$$

Equation 3

$$L_{bm} = P_{bmb} \cdot Q_{bm} \quad (3)$$

Psw is a swing pressure, which is a value obtained when a meter-in pressure is selected from a swing left pressure and swing right pressure detected by the pressure sensors A11, B11. Pbmb is a boom bottom pressure, which is the pressure in the bottom oil chamber of the boom cylinder 6 and detected by the pressure sensor A6.

The target operation computation section 110 uses Equations (4) and (5) to calculate a bucket power upper-limit value Lbkmax and an arm power upper-limit value Lammax, respectively.

Equation 4

$$L_{bk\,\max} = k_{bk}\left(L_{\max} - L_{sw} - L_{bm}\right) \quad (4)$$

Equation 5

$$L_{am\,\max} = k_{am}\left(L_{\max} - L_{sw} - L_{bm}\right) \quad (5)$$

Lmax is a total power upper-limit value of the system, kbk is a bucket power coefficient, and kam is an arm power coefficient. The bucket power coefficient kbk and the arm power coefficient kam are calculated by using the bucket crowding pilot pressure BkC, the bucket dumping pilot pressure BkD, the arm crowding pilot pressure AmC, the arm dumping pilot pressure AmD, and Equation (6).

Equation 6

$$k_{bk} : k_{am} = \max\left(BkC, BkD\right) : \max\left(AmC, AmD\right) \quad (6)$$

The target operation computation section 110 calculates a bucket target flow rate Qbk by using the bucket crowding reference flow rate Qbkc0, the bucket dumping reference flow rate Qbkd0, the bucket power upper-limit value Lbkmax, and Equation (7). Further, the target operation computation section 110 calculates an arm target flow rate Qam by using the arm crowding reference flow rate Qamc0, the arm dumping reference flow rate Qamd0, the arm power upper-limit value Lammax, and Equation (8).

Equation 7

$$Q_{bk} = \min\left(Q_{bkc0}, Q_{bkd0}, L_{bk\,max}/P_{bk}\right) \qquad (7)$$

Equation 8

$$Q_{am} = \min\left(Q_{amc0}, Q_{amd0}, L_{am\,max}/P_{am}\right) \qquad (8)$$

Pbk is a value obtained when a meter-in pressure is selected from the pressures in the bottom oil chamber and rod oil chamber of the bucket cylinder 8, which are detected by the pressure sensors A8, B8. Meanwhile, Pam is a value obtained when a meter-in pressure is selected from the pressures in the bottom oil chamber and rod oil chamber of the arm cylinder 7, which are detected by the pressure sensors A7, B7.

An exemplary computation performed by the communication control section 120 will now be described with reference to FIG. 5. The communication control section 120 includes a first function generator 120a, a second function generator 120b, a third function generator 120c, a minimum value selection section 120d, and a maximum value selection section 120e.

As illustrated in FIG. 5, the first function generator 120a and the second function generator 120b input a swing pilot pressure that represents the maximum value of the swing right pilot pressure and swing left pilot pressure detected by the pressure sensors 107, 108. The first function generator 120a stores beforehand a command pressure for the arm 2 flow control valve 23 with respect to the swing pilot pressure as a map M1a in a table.

The map M1a is characterized such that the arm 2 flow control valve command pressure increases with an increase in the swing pilot pressure. Thus, the opening in the arm 2 flow control valve 23 narrows with an increase in the swing pilot pressure, thereby breaking the communication between the second hydraulic pump 20b and the arm cylinder 7. Therefore, when the swing pilot pressure increases, the second hydraulic pump 20b drives only the swing hydraulic motor 11. This makes it possible to avoid a flow division loss that is caused by a load pressure difference between the arm cylinder 7 and the swing hydraulic motor 11.

In the description of the present embodiment, breaking the communication signifies that a passage flow rate is substantially reduced to zero, and that the opening is not necessarily completely closed.

The second function generator 120b stores beforehand a command pressure for the arm 1 flow control valve 22 with respect to the swing pilot pressure as a map M1c in a table. The map M1c is characterized such that the arm 1 flow control valve command pressure decreases with an increase in the swing pilot pressure. The second function generator 120b outputs a calculated arm 1 flow control valve command pressure to the minimum value selection section 120d.

The maximum value selection section 120e inputs the bucket crowding pilot pressure and bucket dumping pilot pressure detected by the pressure sensors 105, 106, computes the maximum value of these pressures, and outputs the maximum value to the minimum value selection section 120d.

The minimum value selection section 120d inputs the arm 1 flow control valve command pressure from the second function generator 120b, a signal indicative of the maximum value of the bucket crowding pilot pressure and bucket dumping pilot pressure from the maximum value selection section 120e, and the boom raising pilot pressure detected by the pressure sensor 101, and computes the minimum value of these values, and outputs the computed minimum value to the third function generator 120c.

The third function generator 120c stores beforehand a command pressure for the arm 1 flow control valve 22 with respect to the minimum value of the maximum value of the bucket crowding pilot pressure and bucket dumping pilot pressure and the boom raising pilot pressure as a map M1b in a table.

The map M1b is characterized such that the arm 1 flow control valve command pressure increases with an increase in the minimum value of the maximum value of the bucket crowding pilot pressure and bucket dumping pilot pressure and the boom raising pilot pressure. Thus, the opening in the arm 1 flow control valve 22 narrows with an increase in the minimum value of the maximum value of the bucket crowding pilot pressure and bucket dumping pilot pressure and the boom raising pilot pressure, thereby breaking the communication between the third hydraulic pump 20c and the arm cylinder 7.

Consequently, when the bucket 5 does not perform a combined operation during a combined aerial operation of the arm 4 and boom 3, the opening in the arm 1 flow control valve 22 is maximized. In this instance, the load pressure of the boom cylinder 6 is higher than that of the arm cylinder 7. Therefore, the delivery hydraulic fluid from the third hydraulic pump 20c is supplied only to the arm cylinder 7. Thus, the first hydraulic pump 20a can drive only the boom cylinder 6, and the second and third hydraulic pumps 20b, 20c can drive only the arm cylinder 7.

Meanwhile, when the bucket 5 performs a combined operation during a combined aerial operation of the arm 4 and boom 3, the load pressure of the boom cylinder 6 is higher than that of the bucket cylinder 8. Therefore, the delivery hydraulic fluid from the first hydraulic pump 20a is supplied only to the bucket cylinder 8. Thus, the first hydraulic pump 20a can drive the bucket cylinder 8, the second hydraulic pump 20b can drive the arm cylinder 7, and the third hydraulic pump 20c can drive the boom cylinder 6. This makes it possible to avoid a flow division loss that is caused by a load pressure difference.

During a swing operation, however, a value to be inputted to the map M1b of the third function generator 120c is limited by the map M1c of the second function generator 120b to a small value in accordance with the swing pilot pressure. Therefore, an opening command pressure for the arm 1 flow control valve 22 does not increase. This prevents the opening in the arm 1 flow control valve 22 from narrowing. As a result, the delivery from the third hydraulic pump 20c is divided and supplied to the boom cylinder 6 and to the arm cylinder 7. This ensures the operation of the arm cylinder 7.

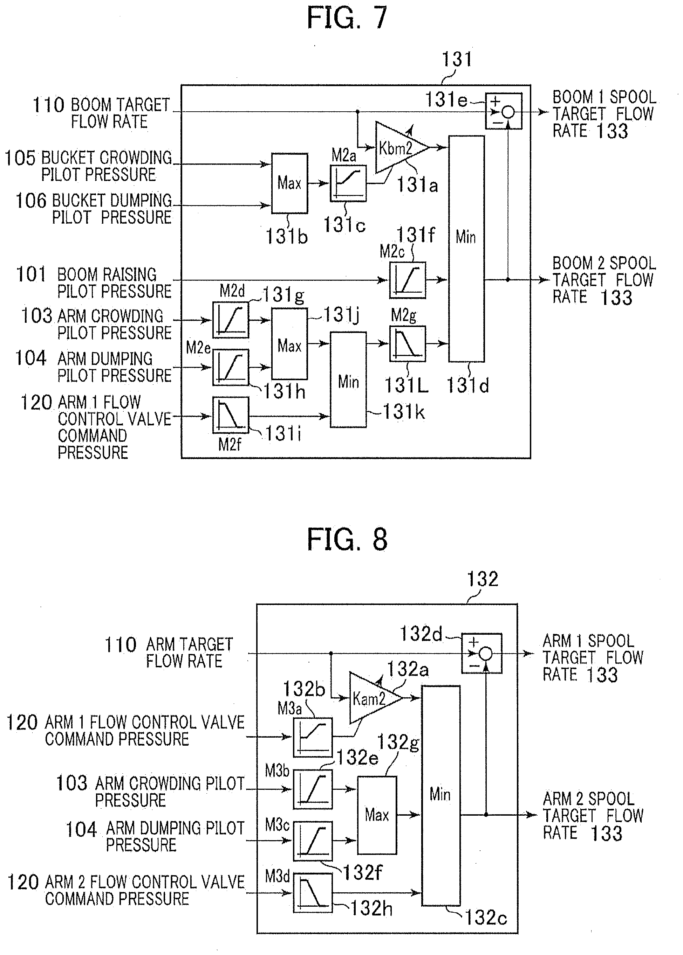

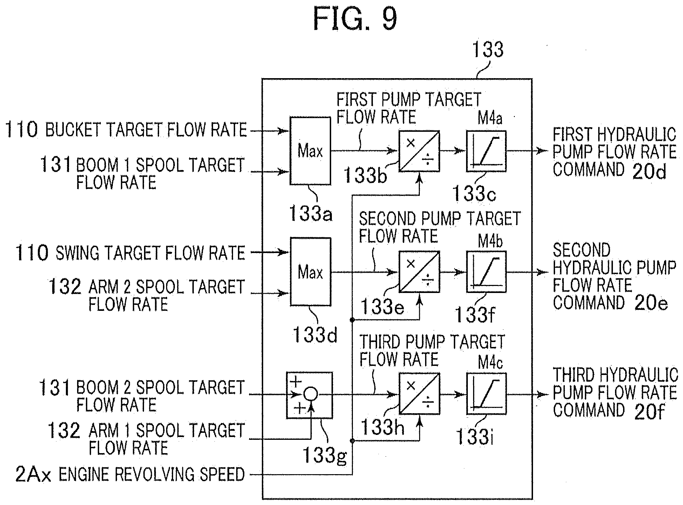

The flow control section 130, which acts as the pump flow control means, will now be described with reference to the accompanying drawings. FIG. 6 is a conceptual diagram illustrating a configuration of the flow control section of the controller included in an embodiment of the hydraulic control system for a work machine in accordance with the present invention. FIG. 7 is a control block diagram illustrating an exemplary computation of a boom flow distribution computation section of the controller included in an embodiment of the hydraulic control system for a work machine in accordance with the present invention. FIG. 8 is a control block diagram illustrating an exemplary computation of an arm target flow distribution computation section of the controller included in an embodiment of the hydraulic control system for a work machine in accordance with the present invention. FIG. 9 is a control block diagram illustrating an exemplary computation of a pump flow rate command computation section of the controller included in an embodiment of the hydraulic control system for a work machine in accordance with the present invention. Elements that are shown in FIGS. 6 to 9 and designated by the same reference numerals as the elements shown in FIGS. 1 to 5 are identical with the corresponding elements and will not be redundantly described in detail.

As illustrated in FIG. 6, the flow control section 130 includes the boom flow distribution computation section 131, the arm flow distribution computation section 132, and the pump flow rate command computation section 133. The boom flow distribution computation section 131 distributively computes a target flow rate for each of a plurality of directional control valves of the boom 3. The arm flow distribution computation section 132 distributively computes a target flow rate for each of a plurality of directional control valves of the arm 4. The pump flow rate command computation section 133 calculates the flow rate of each pump in accordance with each of the distributively computed target flow rates and outputs a command signal to the hydraulic pump regulators 20d-20f in order to control the delivery flow rates of the first to third hydraulic pumps 20a-20c.

An exemplary computation performed by the boom flow distribution computation section 131 will now be described with reference to FIG. 7. The boom flow distribution computation section 131 includes a variable gain multiplier 131a, a first maximum value selection section 131b, a first function generator 131c, a first minimum value selection section 131d, a subtractor 131e, a second function generator 131f, a third function generator 131g, a fourth function generator 131h, a fifth function generator 131i, a second maximum value selection section 131j, a second minimum value selection section 131k, and a sixth function generator 131L.

The variable gain multiplier 131a inputs the boom target flow rate from the target operation computation section 110 and multiplies the boom target flow rate by a gain Kbm2 outputted from the first function generator 131c to compute a boom 2 spool target flow rate. A signal indicative of the calculated boom 2 spool target flow rate is then outputted to the first minimum value selection section 131d.

The first maximum value selection section 131b inputs the bucket crowding pilot pressure and bucket dumping pilot pressure detected by the pressure sensors 105, 106, computes the maximum value of these pressures, and outputs the computed maximum value to the first function generator 131c.

The first function generator 131c stores beforehand the gain Kbm2, which is based on the maximum value of the bucket crowding pilot pressure and bucket dumping pilot pressure, as a map M2a in a table. For example, if the bucket crowding pilot pressure and the bucket dumping pilot pressure are both minimized, the gain Kbm2 may be set to 0.5. If, by contrast, either the bucket crowding pilot pressure or the bucket dumping pilot pressure is maximized, the gain Kbm2 may be set to 1.

The first minimum value selection section 131d inputs a boom 2 spool target flow rate signal from the variable gain multiplier 131a, a limit signal from the second function generator 131f, and a limit signal from the sixth function generator 131L, computes the minimum value of these signals as the boom 2 spool target flow rate, and outputs the boom 2 spool target flow rate to the subtractor 131e and to the pump flow rate command computation section 133.

The subtractor 131e inputs the boom target flow rate from the target operation computation section 110 and the boom 2 spool target flow rate from the first minimum value selection section 131d and subtracts the boom 2 spool target flow rate from the boom target flow rate to calculate a boom 1 spool target flow rate. A signal indicative of the calculated boom 1 spool target flow rate is then outputted to the pump flow rate command computation section 133.

The second function generator 131f inputs the boom raising pilot pressure detected by the pressure sensor 101 and outputs a limit signal to the first minimum value selection section 131d. An upper-limit value for the boom 2 spool target flow rate with respect to the boom raising pilot pressure is stored in the second function generator 131f as a map M2c in a table beforehand. The map M2c is substantially proportional to the area of the opening in the boom second directional control valve 13c and increases in accordance with the boom raising pilot pressure. That is to say, the upper-limit value for the boom 2 spool target flow rate increases in accordance with area of the opening in the boom second directional control valve 13c.

The third function generator 131g inputs the arm crowding pilot pressure detected by the pressure sensor 103, acquires a signal from a map M2d stored in a table, and outputs the acquired signal to the second maximum value selection section 131j. The map M2d indicates the area of a crowding opening in the arm first directional control valve 14c with respect to the arm crowding pilot pressure.

The fourth function generator 131h inputs the arm dumping pilot pressure detected by the pressure sensor 104, acquires a signal from a map M2e stored in a table, and outputs the acquired signal to the second maximum value selection section 131j. The map M2e indicates the area of a dumping opening in the arm first directional control valve 14c with respect to the arm dumping pilot pressure.

The second maximum value selection section 131j inputs the output of the third function generator 131g and the output of the fourth function generator 131h, computes the maximum value of these outputs, and outputs the computed maximum value to the second minimum value selection section 131k.

The fifth function generator 131i inputs an arm 1 flow control valve command pressure signal from the communication control section 120, acquires a signal from a map M2f stored in a table, and outputs the acquired signal to the second minimum value selection section 131k. The map M2f indicates the area of the opening in the arm 1 flow control valve 22 with respect to the arm 1 flow control valve command pressure.

The second minimum value selection section 131k inputs a signal indicative of the maximum value of the output of the third function generator 131g and the output of the fourth function generator 131h, which are obtained from the second maximum value selection section 131j, and an output signal of the fifth function generator 131i, computes the minimum value of these signals, and outputs the computed minimum value to the sixth function generator 131L.

The sixth function generator 131L inputs a signal from the second minimum value selection section 131k and outputs a limit signal to the first minimum value selection section 131d. A limit value for the boom 2 spool target flow rate with respect to the minimum value of the maximum value of values computed from the arm crowding pilot pressure and arm dumping pilot pressure by using the maps M2d, M2e and a value computed from the arm 1 flow control valve command pressure by using the map M2f is stored in the sixth function generator 131L as a map M2g in a table.

That is to say, the boom 2 spool target flow rate is limited to a small value in accordance with a value computed by using the map M2g. This limits the boom 2 spool target flow rate in accordance with the degree of communication between the third hydraulic pump 20c and the arm cylinder 7.

An exemplary computation performed by the arm flow distribution computation section 132 will now be described with reference to FIG. 8. The arm flow distribution computation section 132 includes a variable gain multiplier 132a, a first function generator 132b, a minimum value selection section 132c, a subtractor 132d, a second function generator 132e, a third function generator 132f, a maximum value selection section 132g, and a fourth function generator 132h.

The variable gain multiplier 132a inputs the arm target flow rate from the target operation computation section 110 and multiplies the arm target flow rate by a gain Kam2 outputted from the first function generator 132b to compute an arm 2 spool target flow rate. A signal indicative of the calculated arm 2 spool target flow rate is then outputted to the minimum value selection section 132c.

The first function generator 132b inputs an arm 1 flow control valve command pressure signal from the communication control section 120, handles a signal obtained from a map M3a stored in a table as a gain Kam2, and outputs the gain Kam2 to the variable gain multiplier 132a. For example, if the arm 1 flow control valve command pressure signal indicates the minimum pressure, the gain Kam2 may be set to 0.5. If, by contrast, the arm 1 flow control valve command pressure signal indicates the maximum pressure, the gain Kam2 may be set to 1.

The minimum value selection section 132c inputs an arm 2 spool target flow rate signal from the variable gain multiplier 132a, a limit signal from the later-described maximum value selection section 132g, and a limit signal from the fourth function generator 132h, computes the minimum value of these signals, and outputs the computed minimum value, as the arm 2 spool target flow rate, to the subtractor 132d and to the pump flow rate command computation section 133.

The subtractor 132d inputs the arm target flow rate from the target operation computation section 110 and the arm 2 spool target flow rate from the minimum value selection section 132c, and subtracts the arm 2 spool target flow rate from the arm target flow rate to calculate an arm 1 spool target flow rate. A signal indicative of the calculated arm 1 spool target flow rate is then outputted to the pump flow rate command computation section 133.

The second function generator 132e inputs the arm crowding pilot pressure detected by the pressure sensor 103, acquires a signal from a map M3b stored in a table, and outputs the acquired signal to the maximum value selection section 132g. The map M3b is substantially proportional to the area of a crowding opening in the arm second directional control valve 14b with respect to the arm crowding pilot pressure.

The third function generator 132f inputs the arm dumping pilot pressure detected by the pressure sensor 104, acquires a signal from a map M3c stored in a table, and outputs the acquired signal to the maximum value selection section 132g. The map M3c is substantially proportional to the area of a dumping opening in the arm second directional control valve 14b with respect to the arm dumping pilot pressure.

The maximum value selection section 132g inputs the output of the second function generator 132e and the output of the third function generator 132f, computes the maximum value of these outputs, and outputs the computed maximum value to the minimum value selection section 132c.

The fourth function generator 132h inputs an arm 2 flow control valve command pressure signal from the communication control section 120, acquires a signal from a map M3d stored in a table, and outputs the acquired signal to the minimum value selection section 132c. The map M3d is substantially proportional to the area of the opening in the arm 2 flow control valve 23 with respect to the arm 2 flow control valve command pressure.

That is to say, the arm 2 spool target flow rate is limited in accordance with the maximum value of values computed from the arm crowding pilot pressure and arm dumping pilot pressure by respectively using the maps M3b, M3c, and with a value computed from the arm 2 flow control valve command pressure by using the map M3d. This increases the upper-limit value for the arm 2 spool target flow rate in accordance with the degree of communication between the second hydraulic pump 20b and the arm cylinder 7.

An exemplary computation performed by the pump flow rate command computation section 133 will now be described with reference to FIG. 9. The pump flow rate command computation section 133 includes a first maximum value selection section 133a, a first divider 133b, a first function generator 133c, a second maximum value selection section 133d, a second divider 133e, a second function generator 133f, a subtractor 133g, a third divider 133h, and a third function generator 133i.

The first maximum value selection section 133a inputs a bucket target flow rate signal from the target operation computation section 110 and a boom 1 spool target flow rate signal from the boom flow distribution computation section 131, computes the maximum value of these signals, and outputs the computed maximum value, as a first pump target flow rate, to the first divider 133b.

The first divider 133b inputs the first pump target flow rate from the first maximum value selection section 133a and the engine revolving speed detected by the revolving speed sensor 2Ax, and divides the first pump target flow rate by the engine revolving speed to calculate a first pump target command. A signal indicative of the calculated first pump target command is then outputted to the first function generator 133c.

The first function generator 133c inputs the first pump target command signal calculated by the first divider 133b, acquires a signal from a map M4a stored in a table, and outputs the acquired signal to the regulator 20d as a first pump flow rate command signal. This controls the delivery flow rate of the first hydraulic pump 20a.

The second maximum value selection section 133d inputs a swing target flow rate signal from the target operation computation section 110 and an arm 2 spool target flow rate signal from the arm flow distribution computation section 132, computes the maximum value of these signals, and outputs the computed maximum value, as a second pump target flow rate, to the second divider 133e.

The second divider 133e inputs the second pump target flow rate from the second maximum value selection section 133d and the engine revolving speed detected by the revolving speed sensor 2Ax, and divides the second pump target flow rate by the engine revolving speed to calculate a second pump target command. A signal indicative of the calculated second pump target command is then outputted to the second function generator 133f.

The second function generator 133f inputs the second pump target command signal calculated by the second divider 133e, acquires a signal from a map M4b stored in a table, and outputs the acquired signal to the regulator 20e as a second pump flow rate command signal. This controls the delivery flow rate of the second hydraulic pump 20b.

The subtractor 133g inputs the boom 2 spool target flow rate signal from the boom flow distribution computation section 131 and an arm 1 spool target flow rate signal from the arm flow distribution computation section 132, and adds the boom 2 spool target flow rate signal to the arm 1 spool target flow rate signal to calculate a third pump target flow rate. A signal indicative of the calculated third pump target flow rate is then outputted to the third divider 133h.

The third divider 133h inputs the third pump target flow rate from the subtractor 133g and the engine revolving speed detected by the revolving speed sensor 2Ax, and divides the third pump target flow rate by the engine revolving speed to calculate a third pump target command. A signal indicative of the calculated third pump target command is then outputted to the third function generator 133i.

The third function generator 133i inputs the third pump target command signal calculated by the third divider 133b, acquires a signal from a map M4c stored in a table, and outputs the acquired signal to the regulator 20f as a third pump flow rate command signal. This controls the delivery flow rate of the third hydraulic pump 20c.

The present embodiment is described on the assumption that the reduction ratio between the engine 2A and each hydraulic pump is 1. If the reduction ratio is other than 1, it is necessary to perform computations in accordance with the reduction ratio.

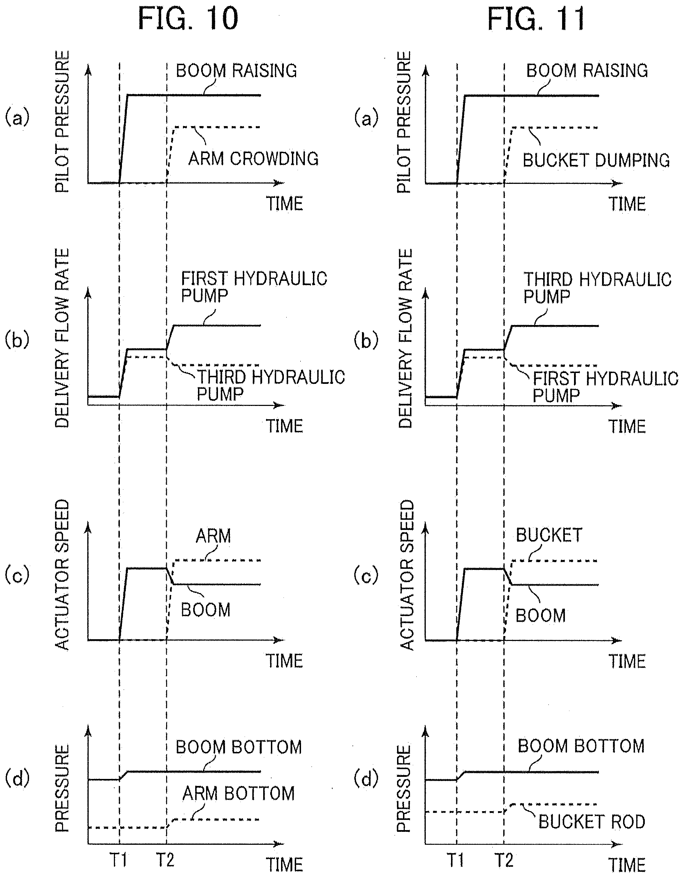

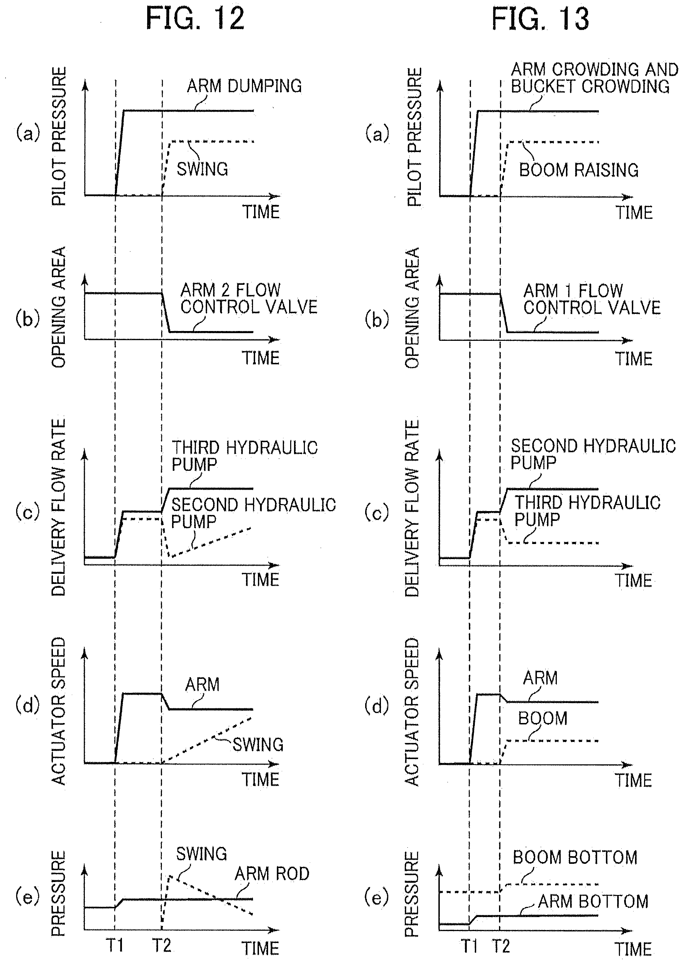

Operations of an embodiment of the hydraulic control system for a work machine will now be described in accordance with the present invention. FIG. 10 is a characteristic diagram illustrating an exemplary operation related to the pump flow control means in an embodiment of the hydraulic control system for a work machine in accordance with the present invention. FIG. 11 is a characteristic diagram illustrating another exemplary operation related to the pump flow control means in an embodiment of the hydraulic control system for a work machine in accordance with the present invention. FIG. 12 is a characteristic diagram illustrating an exemplary operation related to the pump flow control means and communication control means in an embodiment of the hydraulic control system for a work machine in accordance with the present invention. FIG. 13 is a characteristic diagram illustrating another exemplary operation related to the pump flow control means and communication control means in an embodiment of the hydraulic control system for a work machine in accordance with the present invention.

FIG. 10 is a characteristic diagram illustrating an exemplary operation that is performed when arm crowding is conducted during a boom raising operation.

In FIG. 10, the horizontal axis represents time, and the vertical axis represents (a) a pilot pressure, (b) the delivery flow rate of a hydraulic pump, (c) an actuator speed, and (d) an actuator pressure. In (a), the solid line indicates boom raising pilot pressure characteristics, and the broken line indicates the arm crowding pilot pressure characteristics. In (b), the solid line indicates the delivery flow rate characteristics of the first hydraulic pump 20a, and the broken line indicates the delivery flow rate characteristics of the third hydraulic pump 20c. In (c), the solid line indicates the actuator speed characteristics of the boom cylinder 6, and the broken line indicates the actuator speed characteristics of the arm cylinder 7. In (d), the solid line indicates the bottom oil chamber pressure characteristics of the boom cylinder 6, and the broken line indicates the bottom oil chamber pressure characteristics of the arm cylinder 7. Time T1 is the time at which a boom raising operation is started. Time T2 is the time at which an arm crowding operation is started.

First of all, when a boom raising operation starts at time T1, the boom raising pilot pressure rises as indicated in (a). The first hydraulic pump 20a and the third hydraulic pump 20c then communicate with the bottom oil chamber of the boom cylinder 6 such that the delivery flow rates of the first and third hydraulic pumps 20a, 20c increase in accordance with the boom raising pilot pressure as indicated in (b). This causes the boom 3 to operate. As a result, the actuator speed of the boom cylinder 6 increases as indicated in (c), and the bottom oil chamber pressure of the boom cylinder 6 increases as indicated in (d) .

Next, when an arm crowding operation starts at time T2, the arm crowding pilot pressure rises as indicated in (a). The second hydraulic pump 20b and the third hydraulic pump 20c then communicate with the bottom oil chamber of the arm cylinder 7. During an aerial operation, the delivery hydraulic fluid from the third hydraulic pump 20c is supplied to the arm cylinder 7 without being significantly divided because the bottom oil chamber pressure of the boom cylinder 6 is higher than that of the arm cylinder 7 as indicated in (d).

In the above instance, as indicated in FIG. 7, the flow control section 130 of the hydraulic control system according to the present embodiment decreases the boom 2 spool target flow rate in accordance with the arm crowding pilot pressure and increases the boom 1 spool target flow rate. As a result, the delivery flow rate of the first hydraulic pump 20a becomes higher as compared to a period before time T2 as indicated in (b). Therefore, a decrease in the boom raising speed can be reduced as indicated in (c) without dividing the delivery hydraulic fluid from the third hydraulic pump 20c. In this instance, the bottom oil chamber pressure of the arm cylinder 7 increases as indicated in (d).

If, in a situation where two hydraulic actuators (boom cylinder 6 and arm cylinder 7) operate in a combined manner, the boom cylinder 6 is regarded as the first hydraulic actuator, a hydraulic pump communicating with the first and second hydraulic actuators through different spools is defined as the other hydraulic pump. In the above-described operation, the third hydraulic pump 20c corresponds to the other hydraulic pump.

Further, a hydraulic pump communicating with the first hydraulic actuator (boom cylinder 6) through a primary spool for the first hydraulic actuator (boom first directional control valve) 13a is defined as the one hydraulic pump. In the above-described operation, the first hydraulic pump 20a corresponds to the one hydraulic pump.

Furthermore, the arm cylinder 7, which is a hydraulic actuator communicating only with the other hydraulic pump 20c without communicating with the one hydraulic pump 20a, is defined as the second hydraulic actuator.

That is to say, the first hydraulic actuator is either one of two simultaneously operated hydraulic actuators that communicates with the one hydraulic pump 20a through the first hydraulic actuator primary spool (boom first directional control valve) 13a and communicates with the other hydraulic pump 20c through a first hydraulic actuator secondary spool (boom second directional control valve) 13c.

When the above definition is formulated, the pump flow control means (flow control section 130) of the controller according to the present embodiment exercises control to increase the delivery flow rate of the one hydraulic pump (first hydraulic pump 20a) to a higher rate when the first hydraulic actuator (boom cylinder 6) and the second hydraulic actuator (arm cylinder 7) are simultaneously operated than when the first hydraulic actuator (boom cylinder 6) is operated and the second hydraulic actuator (arm cylinder 7) is not operated.

An operation performed when bucket dumping is conducted during a boom raising operation will now be described with reference to FIG. 11.

In FIG. 11, the horizontal axis represents time, and the vertical axis represents (a) a pilot pressure, (b) the delivery flow rate of a hydraulic pump, (c) an actuator speed, and (d) an actuator pressure. In (a), the solid line indicates the boom raising pilot pressure characteristics, and the broken line indicates bucket dumping pilot pressure characteristics. In (b), the solid line indicates the delivery flow rate characteristics of the third hydraulic pump 20c, and the broken line indicates the delivery flow rate characteristics of the first hydraulic pump 20a. In (c), the solid line indicates the actuator speed characteristics of the boom cylinder 6, and the broken line indicates the actuator speed characteristics of the bucket cylinder 8. In (d), the solid line indicates the bottom oil chamber pressure characteristics of the boom cylinder 6, and the broken line indicates the rod oil chamber pressure characteristics of the bucket cylinder 8. Time T1 is the time at which a boom raising operation is started. Time T2 is the time at which a bucket dumping operation is started. Operations that are indicated in FIG. 11 and performed before time T2 are the same as those described with reference to FIG. 10 and will not be redundantly described.

When a bucket dumping operation starts at time T2, the bucket dumping pilot pressure rises as indicated in (a). The first hydraulic pump 20a then communicates with the rod oil chamber of the bucket cylinder 8. During an aerial operation, the delivery hydraulic fluid from the first hydraulic pump 20a is supplied to the bucket cylinder 8 without being significantly diverged because the bottom oil chamber pressure of the boom cylinder 6 is higher than the rod oil chamber pressure of the bucket cylinder 8 as indicated in (d).

In the above instance, as indicated in FIG. 7, the flow control section 130 of the hydraulic control system according to the present embodiment increases the boom 2 spool target flow rate in accordance with the bucket dumping pilot pressure and decreases the boom 1 spool target flow rate. As a result, the delivery flow rate of the third hydraulic pump 20c becomes higher as compared to a period before time T2 as indicated in (b). Therefore, a decrease in the boom raising speed can be reduced as indicated in (c) without dividing the delivery hydraulic fluid from the first hydraulic pump 20a. In this instance, the rod oil chamber pressure of the bucket cylinder 8 increases as indicated in (d) .

If, in a situation where two hydraulic actuators (boom cylinder 6 and bucket cylinder 8) operate in a combined manner, the boom cylinder 6 is regarded as the first hydraulic actuator, a hydraulic pump communicating with the first and second hydraulic actuators through different spools is defined as the other hydraulic pump. In the above-described operation, the first hydraulic pump 20a corresponds to the other hydraulic pump.

Further, a hydraulic pump communicating with the first hydraulic actuator (boom cylinder 6) through a primary spool for the first hydraulic actuator (boom second directional control valve) 13c is defined as the one hydraulic pump. In the above-described operation, the third hydraulic pump 20c corresponds to the one hydraulic pump.

Furthermore, the bucket cylinder 8, which is a hydraulic actuator communicating only with the other hydraulic pump 20a without communicating with the one hydraulic pump 20c, is defined as the second hydraulic actuator.

That is to say, the first hydraulic actuator is either one of two simultaneously operated hydraulic actuators that communicates with the one hydraulic pump 20c through the first hydraulic actuator primary spool (boom first directional control valve) 13a and communicates with the other hydraulic pump 20a through the first hydraulic actuator secondary spool (boom second directional control valve) 13c.

When the above definition is formulated, the pump flow control means (flow control section 130) of the controller according to the present embodiment exercises control to increase the delivery flow rate of the one hydraulic pump (third hydraulic pump 20c) to a higher rate when the first hydraulic actuator (boom cylinder 6) and the second hydraulic actuator (bucket cylinder 8) are simultaneously operated than when the first hydraulic actuator (boom cylinder 6) is operated and the second hydraulic actuator (bucket cylinder 8) is not operated.

An operation performed when a swing is conducted during an arm dumping operation will now be described with reference to FIG. 12.

In FIG. 12, the horizontal axis represents time, and the vertical axis represents (a) a pilot pressure, (b) the area of an opening, (c) the delivery flow rate of a hydraulic pump, (d) an actuator speed, and (e) an actuator pressure. In (a), the solid line indicates arm dumping pilot pressure characteristics, and the broken line indicates swing pilot pressure characteristics. In (b), the solid line indicates the opening area characteristics of the arm 2 flow control valve. In (c), the solid line indicates the delivery flow rate characteristics of the third hydraulic pump 20c, and the broken line indicates the delivery flow rate characteristics of the second hydraulic pump 20b. In (d), the solid line indicates the actuator speed characteristics of the arm cylinder 7, and the broken line indicates the actuator speed characteristics of the swing hydraulic motor 11. In (e), the solid line indicates the rod oil chamber pressure characteristics of the arm cylinder 7, and the broken line indicates the supply pressure characteristics of the swing hydraulic motor. Time T1 is the time at which an arm dumping operation is started. Time T2 is the time at which a swing operation is started.

First of all, when an arm dumping operation starts at time T1, the arm dumping pilot pressure rises as indicated in (a). The third hydraulic pump 20c and the second hydraulic pump 20b then communicate with the rod oil chamber of the arm cylinder 7 such that the delivery flow rates of the second and third hydraulic pumps 20b, 20c increase in accordance with the arm dumping pilot pressure as indicated in (c). This causes the arm 4 to operate. As a result, the actuator speed of the arm cylinder 7 increases as indicated in (d), and the rod oil chamber pressure of the arm cylinder 7 increases as indicated in (e).

Next, when a swing operation starts at time T2, the swing pilot pressure rises as indicated in (a). The second hydraulic pump 20b then communicates with the swing hydraulic motor 11.

In the above instance, the communication control section 120 of the hydraulic control system according to the present embodiment increases the arm 2 flow control valve command pressure in accordance with the swing pilot pressure as indicated in FIG. 5, and interrupts the opening in the arm 2 flow control valve 23 as indicated in (b) of FIG. 12. This causes the delivery hydraulic fluid from the second hydraulic pump 20b to be supplied to the swing hydraulic motor 11 without being significantly divided.

Further, as indicated in FIG. 8, the flow control section 130 of the hydraulic control system according to the present embodiment decreases the arm 2 spool target flow rate in accordance with the arm 2 flow control valve command pressure and increases the arm 1 spool target flow rate. As a result, the delivery flow rate of the third hydraulic pump 20c becomes higher as compared to a period before time T2 as indicated in (c). Therefore, a decrease in the arm dumping speed can be reduced as indicated in (d) without dividing the delivery hydraulic fluid from the second hydraulic pump 20b. In this instance, the pressure of the swing hydraulic motor 11 increases as indicated in (e).

If, in a situation where two hydraulic actuators (arm cylinder 7 and swing hydraulic motor 11) operate in a combined manner, the arm cylinder 7 is regarded as the first hydraulic actuator, a hydraulic pump communicating with the first and second hydraulic actuators through different spools is defined as the other hydraulic pump. In the above-described operation, the second hydraulic pump 20b corresponds to the other hydraulic pump.

Further, a hydraulic pump communicating with the first hydraulic actuator (arm cylinder 7) through a primary spool for the first hydraulic actuator (arm first directional control valve) 14c is defined as the one hydraulic pump. In the above-described operation, the third hydraulic pump 20c corresponds to the one hydraulic pump.

Furthermore, the swing hydraulic motor 11, which is a hydraulic actuator communicating only with the other hydraulic pump 20b without communicating with the one hydraulic pump 20c, is defined as the second hydraulic actuator.

That is to say, the first hydraulic actuator is either one of two simultaneously operated hydraulic actuators that communicates with the one hydraulic pump 20c through the first hydraulic actuator primary spool (arm first directional control valve) 14c and communicates with the other hydraulic pump 20b through the first hydraulic actuator secondary spool (arm second directional control valve) 14b.

When the above definition is formulated, the pump flow control means (flow control section 130) of the controller according to the present embodiment exercises control to increase the delivery flow rate of the one hydraulic pump (third hydraulic pump 20c) to a higher rate when the first hydraulic actuator (arm cylinder 7) and the second hydraulic actuator (swing hydraulic motor 11) are simultaneously operated than when the first hydraulic actuator (arm cylinder 7) is operated and the second hydraulic actuator (swing hydraulic motor 11) is not operated.

An operation performed when boom raising is conducted during a combined operation of arm crowding and bucket crowding will now be described with reference to FIG. 13.

In FIG. 13, the horizontal axis represents time, and the vertical axis represents (a) a pilot pressure, (b) the area of an opening, (c) the delivery flow rate of a hydraulic pump, (d) an actuator speed, and (e) an actuator pressure. In (a), the solid line indicates arm crowding pilot pressure characteristics and bucket dumping pilot pressure characteristics, and the broken line indicates boom raising pilot pressure characteristics. In (b), the solid line indicates the opening area characteristics of the arm 1 flow control valve 22. In (c), the solid line indicates the delivery flow rate characteristics of the second hydraulic pump 20b, and the broken line indicates the delivery flow rate characteristics of the third hydraulic pump 20c. For brevity of explanation, the delivery flow rate characteristics of the first hydraulic pump 20a are omitted. In (d), the solid line indicates the actuator speed characteristics of the arm cylinder 7, and the broken line indicates the actuator speed characteristics of the boom cylinder 6. In (e), the solid line indicates the bottom oil chamber pressure characteristics of the arm cylinder 7, and the broken line indicates the bottom oil chamber pressure characteristics of the boom cylinder 6. Time T1 is the time at which a combined operation of arm crowding and bucket crowding is started. Time T2 is the time at which a boom raising operation is started.

First of all, when a combined operation of arm crowding and bucket crowding starts at time T1, the arm crowding pilot pressure and the bucket crowding pilot pressure rise as indicated in (a). Then, the first hydraulic pump 20a communicates with the bottom oil chamber of the bucket cylinder 8, and the third hydraulic pump 20c and the second hydraulic pump 20b communicate with the bottom oil chamber of the arm cylinder 7. Thus, the delivery flow rates of the second and third hydraulic pumps 20b, 20c increase in accordance with the arm crowding pilot pressure and the bucket crowding pilot pressure as indicated in (c). This causes the arm 4 and the bucket 5 to operate. As a result, the actuator speed of the arm cylinder 7 increases as indicated in (d), and the bottom oil chamber pressure of the arm cylinder 7 increases as indicated in (e) .

Next, when a boom raising operation starts at time T2, the boom raising pilot pressure rises as indicated in (a). The first and third hydraulic pumps 20a, 20c then communicate with the bottom oil chamber of the boom cylinder 6. When the bottom oil chamber pressure of the bucket cylinder 8 is low, the delivery hydraulic fluid from the first hydraulic pump 20a is supplied to the bucket cylinder 8 without being significantly divided.

In the above instance, the communication control section 120 of the hydraulic control system according to the present embodiment increases the arm 1 flow control valve command pressure in accordance with the boom raising pilot pressure as indicated in FIG. 5, and interrupts the opening in the arm 1 flow control valve 22 as indicated in (b) of FIG. 13. This causes the delivery hydraulic fluid from the third hydraulic pump 20c to be supplied to the boom cylinder 6 without being significantly divided.

Further, as indicated in FIG. 8, the flow control section 130 of the hydraulic control system according to the present embodiment increases the arm 2 spool target flow rate in accordance with the arm 1 flow control valve command pressure and decreases the arm 1 spool target flow rate. As a result, the delivery flow rate of the second hydraulic pump 20b becomes higher as compared to a period before time T2 as indicated in (c). Therefore, a decrease in the arm crowding speed can be reduced as indicated in (d) without dividing the delivery hydraulic fluid from each hydraulic pump. In this instance, the bottom oil chamber pressure of the boom cylinder 6 increases as indicated in (e).

If, in a situation where two hydraulic actuators (arm cylinder 7 and boom cylinder 6) operate in a combined manner, the arm cylinder 7 is regarded as the first hydraulic actuator, a hydraulic pump communicating with the first and second hydraulic actuators through different spools is defined as the other hydraulic pump. In the above-described operation, the third hydraulic pump 20c corresponds to the other hydraulic pump.

Further, a hydraulic pump communicating with the first hydraulic actuator (arm cylinder 7) through a primary spool for the first hydraulic actuator (arm second directional control valve) 14b is defined as the one hydraulic pump. In the above-described operation, the second hydraulic pump 20b corresponds to the one hydraulic pump.

Furthermore, the boom cylinder 6, which is a hydraulic actuator communicating only with the other hydraulic pump 20c without communicating with the one hydraulic pump 20b, is defined as the second hydraulic actuator.

That is to say, the first hydraulic actuator is either one of two simultaneously operated hydraulic actuators that communicates with the one hydraulic pump 20b through the first hydraulic actuator primary spool (arm second directional control valve) 14b and communicates with the other hydraulic pump 20c through the first hydraulic actuator secondary spool (arm first directional control valve) 14c.

When the above definition is formulated, the pump flow control means (flow control section 130) of the controller according to the present embodiment exercises control to increase the delivery flow rate of the one hydraulic pump (second hydraulic pump 20b) to a higher rate when the first hydraulic actuator (arm cylinder 7) and the second hydraulic actuator (boom cylinder 6) are simultaneously operated than when the first hydraulic actuator (arm cylinder 7) is operated and the second hydraulic actuator (boom cylinder 6) is not operated.

According to an embodiment of the present invention, the hydraulic control system for a work machine includes the first hydraulic actuator, the one hydraulic pump, the second hydraulic actuator, the other hydraulic pump, and the secondary spool for the first hydraulic actuator. The one hydraulic pump is capable of supplying hydraulic fluid to the first hydraulic actuator through the primary spool for the first hydraulic actuator. The other hydraulic pump is capable of supplying hydraulic fluid to the second hydraulic actuator through the primary spool for the second hydraulic actuator. The secondary spool for the first hydraulic actuator is capable of placing the first hydraulic actuator in communication with the other hydraulic pump. When the first and second hydraulic actuators are simultaneously operated, the delivery flow rate of the one hydraulic pump increases to a higher rate than when the first hydraulic actuator is operated and the second hydraulic actuator is not operated. Therefore, it is possible to reduce a decrease in the speed of the first hydraulic actuator that is caused by the operation of the second hydraulic actuator. Further, in the above instance, the opening for communication between the first hydraulic actuator and the second hydraulic pump is interrupted. Consequently, the amount of divided flow of the delivery hydraulic fluid from the second hydraulic pump can be decreased to reduce the flow division loss.

Description of Reference Numerals

1: Lower travel structure
2: Upper swing structure
2A: Engine
3: Boom
4: Arm
5: Bucket
6: Boom cylinder
7: Arm cylinder
8: Bucket cylinder
9: Operating lever (operating device)
10: Control valve

11: Swing hydraulic motor
13a: Boom first directional control valve (spool)
13c: Boom second directional control valve (spool)
14b: Arm second directional control valve (spool)
14c: Arm first directional control valve (spool)
15a: Bucket directional control valve (spool)
16b: Swing directional control valve (spool)
20: Hydraulic pump device
20a: First hydraulic pump
20b: Second hydraulic pump
20c: Third hydraulic pump
20d: First hydraulic pump regulator
20e: Second hydraulic pump regulator
20f: Third hydraulic pump regulator
21a: First pump line
21b: Second pump line
21c: Third pump line
22: Arm 1 flow control valve
23: Arm 2 flow control valve
100: Controller
101-108: Pilot pressure sensor (operating instruction detection means)
110: Target operation computation section
120: Communication control section (communication control means)
130: Flow control section (pump flow control means)

**Claims**

1. A work machine, comprising:

- a boom cylinder (6);
- a first hydraulic pump (20a) that is capable of supplying hydraulic fluid to the boom cylinder (6) through a boom primary spool (13a);
- an arm cylinder (7);
- a second hydraulic pump (20b) that is capable of supplying hydraulic fluid to the arm cylinder (7) through an arm secondary spool (14b);
- a third hydraulic pump (20c) that is capable of supplying hydraulic fluid to the arm cylinder (7) through an arm primary spool (14c);
- a boom secondary spool (13c) that is capable of placing the boom cylinder (6) in communication with the second hydraulic pump (20c);
- a pilot pressure sensor (101) that detects an issuance of operating instructions to the boom cylinder (6) and the arm cylinder (7), and
- pump flow control means (130) that is capable of adjusting the delivery flow rate of the first hydraulic pump (20a), the delivery flow rate of the second hydraulic pump (20b) and the delivery flow rate of the third hydraulic pump (20c) on an individual basis in accordance with operation amounts designated by the operating instructions for the boom cylinder (6) and the arm cylinder (7), the operating instructions being detected by the pilot pressure sensor (101); **characterised in that**,
when a raising operation of the boom cylinder (6) is independently performed, the pump flow control means (130) adjusts the delivery flow rates of the first hydraulic pump (20a) and the third hydraulic pump (20c) such that both the first hydraulic pump (20a) and the third hydraulic pump (20c) supply hydraulic fluid to the boom cylinder (6), and
when a raising operation of the boom cylinder (6) and a crowding operation of the arm cylinder (7) are performed in combination after a raising operation of the boom cylinder (6) is independently performed, the second hydraulic pump (20b) and the third hydraulic pump (20c) each communicate with the arm cylinder (7) and the pump flow control means (130) increases a target flow rate to be supplied to the boom primary spool (13a) and decreases a target flow rate to be supplied to the boom secondary spool (13c), and increases the delivery flow rate of the first hydraulic pump (20a) based on the increased target flow rate to be supplied to the boom primary spool (13a) and decreases the delivery flow rate of the second hydraulic pump (20b) based on the decreased target flow rate to be supplied to the boom secondary spool (13c).

**Patentansprüche**

1. Arbeitsmaschine, die Folgendes umfasst:

   - einen Auslegerzylinder (6);
   - eine erste Hydraulikpumpe (20a), die durch einen Auslegerprimärkolben (13a) Hydraulikfluid zu dem Auslegerzylinder (6) fördern kann;
   - einen Armzylinder (7);
   - eine zweite Hydraulikpumpe (20b), die durch einen Armsekundärkolben (14b) Hydraulikfluid zu dem Armzylinder (7) fördern kann;
   - eine dritte Hydraulikpumpe (20c), die durch einen Armprimärkolben (14c) Hydraulikfluid zu dem Armzylinder (7) fördern kann;
   - einen Auslegersekundärkolben (13c), der den Auslegerzylinder (6) in Kommunikation mit der zweiten Hydraulikpumpe (20c) versetzen kann;
   - einen Vorsteuerdrucksensor (101), der eine Erteilung von Betriebsanweisungen an den Auslegerzylinder (6) und den Armzylinder (7) detektiert, und
   - Pumpendurchsatz-Steuerungsmittel (130), die die Förderdurchflussmenge der ersten Hydraulikpumpe (20a), die Förderdurchflussmenge der zweiten Hydraulikpumpe (20b) und die Förderdurchflussmenge der dritten Hydraulikpumpe (20c) auf einer individuellen Basis in Übereinstimmung mit Betätigungsmengen, die von den Betriebsanweisungen für den Auslegerzylinder (6) und den Armzylinder (7) bestimmt worden sind, einstellen können, wobei die Betriebsanweisungen durch den Vorsteuerdrucksensor (101) detektiert werden;
   **dadurch gekennzeichnet, dass**
   dann, wenn ein Anhebebetrieb des Auslegerzylinders (6) unabhängig durchgeführt wird, die Pumpendurchsatz-Steuerungsmittel (130) die Förderdurchflussmengen der ersten Hydraulikpumpe (20a) und der dritten Hydraulikpumpe (20c) derart einstellen, dass sowohl die erste Hydraulikpumpe (20a) als auch die dritte Hydraulikpumpe (20c) Hydraulikfluid zu dem Auslegerzylinder (6) fördern, und
   dann, wenn ein Anhebebetrieb des Auslegerzylinders (6) und ein Verdrängungsbetrieb des Armzylinders (7) in Kombination durchgeführt werden nachdem ein Anhebebetrieb des Auslegerzylinders (6) unabhängig durchgeführt worden ist, die zweite Hydraulikpumpe (20b) und die dritte Hydraulikpumpe (20c) jeweils mit dem Armzylinder (7) kommunizieren und die Pumpendurchsatz-Steuerungsmittel (130) eine Ziel-Durchflussmenge, die zu dem Auslegerprimärkolben (13a) gefördert werden soll, erhöhen, und eine Ziel-Durchflussmenge, die zu dem Auslegersekundärkolben (13c) gefördert werden soll, verringern, und die Förderdurchflussmenge der ersten Hydraulikpumpe (20a) basierend auf der erhöhten Ziel-Durchflussmenge, die zu dem Auslegerprimärkolben (13a) gefördert werden soll, erhöhen und die Förderdurchflussmenge der zweiten Hydraulikpumpe (20b) basierend auf der verringerten Ziel-Durchflussmenge, die zu dem Auslegersekundärkolben (13c) gefördert werden soll, verringern.

**Revendications**

1. Machine de chantier comprenant :

   - un vérin de flèche (6) ;
   - une première pompe hydraulique (20a) qui est capable d'alimenter un fluide hydraulique au vérin de flèche (6) via un premier tiroir primaire de flèche (13a) ;
   - un vérin de bras (7) ;
   - une deuxième pompe hydraulique (20b) qui est capable d'alimenter un fluide hydraulique au vérin de bras (7) via un tiroir secondaire de bras (14b) ;
   - une troisième pompe hydraulique (20c) qui est capable d'alimenter un fluide hydraulique au vérin de bras (7) via un tiroir primaire de bras (14c) ;
   - un tiroir secondaire de flèche (13c) qui est capable de placer le vérin de flèche (6) en communication avec la deuxième pompe hydraulique (20c) ;
   - un capteur de pression pilote (101) qui détecte une émission d'instructions d'actionnement vers le vérin de flèche (6) et le vérin de bras (7), et
   - un moyen de commande de débit de pompe (130) qui est capable d'ajuster le débit de distribution de la première pompe hydraulique (20a), le débit de distribution de la deuxième pompe hydraulique (20b) et le débit de distribution de la troisième pompe hydraulique (20c) sur une base individuelle en accord avec les amplitudes d'actionnement désignées par les instructions d'actionnement pour le vérin de flèche (6) et le vérin de bras (7), les instructions d'actionnement étant détectées par le capteur de pression pilote (101) ;

**caractérisée en ce que**

quand un actionnement de levage du vérin de flèche (6) est effectué de manière indépendante, le moyen de commande de débit de pompe (130) ajuste les débits de distribution de la première pompe hydraulique (20a) et de la troisième pompe hydraulique (20c) de telle sorte qu'à la fois la première pompe hydraulique (20a) et la troisième pompe hydraulique (20c) alimentent un fluide hydraulique au vérin de flèche (6), et

quand un actionnement de levage du vérin de flèche (6) et un actionnement de rétraction du vérin de bras (7) sont effectués de manière combinée après qu'un actionnement de levage de flèche a été effectué de manière indépendante, la deuxième pompe hydraulique (20b) et la troisième pompe hydraulique (20c) communiquent chacune avec le vérin de bras (7) et le moyen de commande de débit de pompe (130) augmente un débit cible qu'il s'agit d'alimenter au tiroir primaire de flèche (13a) et diminue un débit cible qu'il s'agit d'alimenter au tiroir secondaire de flèche (13c), et augmente le débit de distribution de la première pompe hydraulique (20a) sur la base du débit cible augmenté qu'il s'agit d'alimenter au tiroir primaire de flèche (13a) et diminue le débit de distribution de la deuxième pompe hydraulique (20b) sur la base du débit cible diminué qu'il s'agit d'alimenter au tiroir secondaire de flèche (13c).

FIG. 1

# FIG. 2

# FIG. 3

Inputs:
- 2Ax ENGINE REVOLVING SPEED
- A11,B11 SWING PRESSURE
- A6 BOOM BOTTOM PRESSURE
- A7 ARM BOTTOM PRESSURE
- B7 ARM ROD PRESSURE
- A8 BUCKET BOTTOM PRESSURE
- B8 BUCKET ROD PRESSURE
- 103 ARM CROWDING PILOT PRESSURE
- 104 ARM DUMPING PILOT PRESSURE
- 101 BOOM RAISING PILOT PRESSURE
- 105 BUCKET CROWDING PILOT PRESSURE
- 106 BUCKET DUMPING PILOT PRESSURE
- 107,108 SWING PILOT PRESSURE

100
110 — TARGET OPERATION COMPUTATION SECTION
- ARM TARGET FLOW RATE
- BOOM TARGET FLOW RATE
- BUCKET TARGET FLOW RATE
- SWING TARGET FLOW RATE

130 — FLOW CONTROL SECTION

120 COMMUNICATION CONTROL SECTION

Outputs:
- FIRST HYDRAULIC PUMP FLOW RATE COMMAND 20d
- SECOND HYDRAULIC PUMP FLOW RATE COMMAND 20e
- THIRD HYDRAULIC PUMP FLOW RATE COMMAND 20f
- ARM 1 FLOW CONTROL VALVE COMMAND PRESSURE 22
- ARM 2 FLOW CONTROL VALVE COMMAND PRESSURE 23

# FIG. 4

FLOW RATE vs PILOT PRESSURE

22

# FIG. 5

107,108 SWING PILOT PRESSURE

M1a → 120a

M1c → 120b   120d

101 BOOM RAISING PILOT PRESSURE

105 BUCKET CROWDING PILOT PRESSURE

106 BUCKET DUMPING PILOT PRESSURE

Max → 120e

Min → 120c

M1b

ARM 2 FLOW CONTROL VALVE COMMAND PRESSURE 23

ARM 1 FLOW CONTROL VALVE COMMAND PRESSURE 22

120

# FIG. 6

2Ax ENGINE REVOLVING SPEED

110 SWING TARGET FLOW RATE

110 BUCKET TARGET FLOW RATE

110 BOOM TARGET FLOW RATE

101 BOOM RAISING PILOT PRESSURE

105 BUCKET CROWDING PILOT PRESSURE

106 BUCKET DUMPING PILOT PRESSURE

103 ARM CROWDING PILOT PRESSURE

104 ARM DUMPING PILOT PRESSURE

120 ARM 1 FLOW CONTROL VALVE COMMAND PRESSURE

110 ARM TARGET FLOW RATE

120 ARM 2 FLOW CONTROL VALVE COMMAND PRESSURE

BOOM FLOW DISTRIBUTION COMPUTATION ~131

ARM FLOW DISTRIBUTION COMPUTATION ~132

BOOM 1 SPOOL TARGET FLOW RATE

BOOM 2 SPOOL TARGET FLOW RATE

ARM 1 SPOOL TARGET FLOW RATE

ARM 2 SPOOL TARGET FLOW RATE

PUMP FLOW RATE COMMAND COMPUTATION

~130

~133

FIRST HYDRAULIC PUMP FLOW RATE COMMAND 20d

SECOND HYDRAULIC PUMP FLOW RATE COMMAND 20e

THIRD HYDRAULIC PUMP FLOW RATE COMMAND 20f

# FIG. 7

110 BOOM TARGET FLOW RATE

105 BUCKET CROWDING PILOT PRESSURE

106 BUCKET DUMPING PILOT PRESSURE

101 BOOM RAISING PILOT PRESSURE

103 ARM CROWDING PILOT PRESSURE

104 ARM DUMPING PILOT PRESSURE

120 ARM 1 FLOW CONTROL VALVE COMMAND PRESSURE

131

131e

Max 131b

M2a 131c

Kbm2 131a

M2c 131f

M2d 131g

Max 131j

M2e 131h

Min 131k

M2f 131i

M2g 131L

Min 131d

BOOM 1 SPOOL TARGET FLOW RATE 133

BOOM 2 SPOOL TARGET FLOW RATE 133

# FIG. 8

110 ARM TARGET FLOW RATE

120 ARM 1 FLOW CONTROL VALVE COMMAND PRESSURE

103 ARM CROWDING PILOT PRESSURE

104 ARM DUMPING PILOT PRESSURE

120 ARM 2 FLOW CONTROL VALVE COMMAND PRESSURE

132

132d

132b M3a

Kam2 132a

M3b 132e

Max 132g

M3c 132f

M3d 132h

Min 132c

ARM 1 SPOOL TARGET FLOW RATE 133

ARM 2 SPOOL TARGET FLOW RATE 133

# FIG. 9

133

110 BUCKET TARGET FLOW RATE → Max

131 BOOM 1 SPOOL TARGET FLOW RATE →

133a

FIRST PUMP TARGET FLOW RATE

133b × ÷ → M4a 133c → FIRST HYDRAULIC PUMP FLOW RATE COMMAND 20d

110 SWING TARGET FLOW RATE → Max

132 ARM 2 SPOOL TARGET FLOW RATE →

133d

SECOND PUMP TARGET FLOW RATE

133e × ÷ → M4b 133f → SECOND HYDRAULIC PUMP FLOW RATE COMMAND 20e

131 BOOM 2 SPOOL TARGET FLOW RATE → +

132 ARM 1 SPOOL TARGET FLOW RATE → +

2Ax ENGINE REVOLVING SPEED →

133g

THIRD PUMP TARGET FLOW RATE

133h × ÷ → M4c 133i → THIRD HYDRAULIC PUMP FLOW RATE COMMAND 20f

# FIG. 10

(a) PILOT PRESSURE

BOOM RAISING

ARM CROWDING

TIME

(b) DELIVERY FLOW RATE

FIRST HYDRAULIC PUMP

THIRD HYDRAULIC PUMP

TIME

(c) ACTUATOR SPEED

ARM

BOOM

TIME

(d) PRESSURE

BOOM BOTTOM

ARM BOTTOM

T1   T2   TIME

# FIG. 11

(a) PILOT PRESSURE

BOOM RAISING

BUCKET DUMPING

TIME

(b) DELIVERY FLOW RATE

THIRD HYDRAULIC PUMP

FIRST HYDRAULIC PUMP

TIME

(c) ACTUATOR SPEED

BUCKET

BOOM

TIME

(d) PRESSURE

BOOM BOTTOM

BUCKET ROD

T1   T2   TIME

# FIG. 12

# FIG. 13

**EP 3 193 024 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010236607 A
- EP 2711559 A
- JP 2013181286 A